# EUROPEAN PATENT APPLICATION

(11) **EP 4 425 760 A1**
(43) Date of publication of application: **04.09.2024**
(21) Application number: 22915921.5
(22) Date of filing: 22.12.2022
(51) Int. Cl.: H02K 3/50

(54) **STATOR**

(30) Priority: 27.12.2021 JP 2021213133
(71) Applicant: NHK Spring Co., Ltd., Kanagawa 236-0004 (JP)
(72) Inventor: ITO, Keiichi, Yokohama-shi, Kanagawa 236-0004 (JP)
(74) Representative: DREISS Patentanwälte PartG mbB
(86) International application number: PCT/JP2022/047461
(87) International publication number: WO 2023/127698

(57) **Abstract**

Heat dissipation of a busbar is improved even in a busbar unit that is integrated with an insulating resin. End portions of coils that are wound round teeth of a stator core of a stator are joined to joining portions (22U2, 22V2, 22W2) of busbars (22U, 22V, 22W) that are disposed adjacent to the stator core. The busbars (22U, 22V, 22W) include extending portions (22U1, 22V1, 22W1) that extend in the circumferential direction of the stator core. An insulating resin (24) is molded integrally with the busbars (22U, 22V, 22W). The extending portions (22U1, 22V1, 22W1) are partially exposed through the insulating resin (24). These exposed portions of the extending portions (22U1, 22V1, 22W1) are sealed in by a sealing resin (32) that is formed of a resin with higher thermal conductivity than the insulating resin (24).

## Description

### TECHNICAL FIELD

The present disclosure relates to a stator of a motor.

### BACKGROUND ART

Japanese Patent Application Laid-Open (JP-A) No. 2018-019511 discloses a busbar unit to be used for electrifying an induction coil of a switched reluctance motor with three phase independent circuits. This busbar unit is disposed adjacent to one axial direction end side of a stator core and is formed by insert-molding plural busbars in an insulating resin. The busbars are fabricated of metal and formed in annular shapes.

### SUMMARY OF INVENTION

### TECHNICAL PROBLEM

In the conventional technology described above, because the plural busbars are integrated with the insulating resin, ease of assembly of the motor is improved. However, the insulating resin mentioned above is often a material with low thermal conductivity. The thermal conductivity may be raised by filling with a filler material, but because this causes issues with moldability and cost, practical utility is poor. Because busbars covered with insulating resin have poor heat dissipation, heat generation during motor operations is large. As a result, performance of the motor is subject to limitations, and problems such as insufficient torque and the like arise.

In consideration of the circumstances described above, an aim of the present disclosure is to provide a stator that may improve heat dissipation of a busbar even in a busbar unit that is integrated with an insulating resin.

### SOLUTION TO PROBLEM

A stator according to a first aspect includes: a stator core including a yoke and plural teeth; plural coils that are wound one-to-one onto the plural teeth; a busbar disposed adjacent to the stator core, the busbar including joining portions to which end portions of the coils are joined and an extending portion that extends in a circumferential direction of the stator core; an insulating resin that is molded integrally with the busbar in a state in which the extending portion is partially exposed; and a sealing resin formed of a resin with higher thermal conductivity than the insulating resin, the sealing resin sealing in at least an exposed portion of the extending portion that is exposed through the insulating resin.

The meaning of the term "disposed adjacent to the stator core" as recited in the first aspect is intended to include structures in which the busbar is disposed at an outer side relative to the teeth (and the yoke).

In the stator according to the first aspect, the coils are wound onto, respectively, the plural teeth of the stator core. An end portion of each coil is joined to a joining portion of the busbar disposed adjacent to the stator core. The busbar includes the extending portion that extends in the circumferential direction of the stator core. This extending portion is partially exposed through the insulating resin that is molded integrally with the busbar. The exposed portions of the extending portion are sealed in by the sealing resin that is constituted of a resin with higher thermal conductivity than the insulating resin. Heat of the busbar may be dissipated through the sealing resin. Thus, heat dissipation of the busbar may be improved even in a busbar unit that is integrated with an insulating resin.

In a stator according to a second aspect, in the first aspect, a portion of the extending portion is exposed through the insulating resin in an axial direction of the stator core.

In the stator according to the second aspect, a portion of the extending portion of the busbar is exposed through the insulating resin in the axial direction of the stator core, and this exposed portion is sealed in by the sealing resin. As a result, heat dissipation of the busbar may be improved even while, for example, an increase in space required in the diametric dimension of the stator core is suppressed.

In a stator according to a third aspect, in the second aspect, the exposed portion of the extending portion that is exposed through the insulating resin is a surface at one plate thickness direction side of the extending portion.

In the stator according to the third aspect, because the exposed portion of the extending portion of the busbar that is exposed through the insulating resin is a surface at one plate thickness direction side of the extending portion, a surface area of the exposed portion may be large.

In a stator according to a fourth aspect, in any one of the first to third aspects, a portion of the extending portion is exposed through the insulating resin in a radial direction of the stator core.

In the stator according to the fourth aspect, a portion of the extending portion of the busbar is exposed through the insulating resin in the radial direction of the stator core, and this exposed portion is sealed in by the sealing resin. As a result, heat dissipation of the busbar may be improved even while, for example, an increase in space required in the axial dimension of the stator core is suppressed.

In a stator according to a fifth aspect, in any one of the first to fourth aspects, the stator core, the plurality of coils and the insulating resin are sealed in by the sealing resin.

In the stator according to the fifth aspect, the stator core, plural coils and insulating resin are sealed by the sealing resin that seals in the exposed portion of the extending portion of the busbar that is exposed through the insulating resin. That is, the exposed portion of the extending portion that is exposed through the insulating resin is sealed in by a sealing resin of a resin-molded motor. Therefore, a sealing resin specifically for improving heat dissipation of the busbar is unnecessary.

In a stator according to a sixth aspect, in any one of the first to fifth aspects, a cooling medium channel is provided in a vicinity of the exposed portion of the extending portion that is exposed through the insulating resin.

In the stator according to the sixth aspect, heat dissipation may be improved by cooling via the sealing resin with high thermal conductivity more than in a structure in which a cooling medium is provided in an insulating resin with low thermal conductivity.

### ADVANTAGEOUS EFFECTS OF INVENTION

As described above, in the stator according to the present disclosure, heat dissipation of a busbar may be improved even in a busbar unit that is integrated with an insulating resin.

### BRIEF DESCRIPTION OF DRAWINGS

Fig. 1 is a perspective view showing a stator according to a first exemplary embodiment.
Fig. 2 is a perspective view showing a state before molding of a sealing resin of the stator according to the first exemplary embodiment.
Fig. 3 is a magnified perspective view showing a magnified portion of the structure shown in Fig. 2.
Fig. 4 is a perspective view showing a portion of a first busbar unit provided in the stator according to the first exemplary embodiment.
Fig. 5 is a perspective view of a portion of the first busbar unit, seen from a different direction from Fig. 4.
Fig. 6 is a perspective sectional diagram showing the portion of the first busbar unit in a sectioned state.
Fig. 7 is a perspective view showing a second busbar unit provided in the stator according to the first exemplary embodiment.
Fig. 8 is a perspective view showing the structure illustrated in Fig. 7 in a state in which an insulating resin is not shown.
Fig. 9 is a perspective sectional diagram showing a portion of a first busbar unit provided in a stator according to a second exemplary embodiment in a sectioned state.

### DETAILED DESCRIPTION

### = First Exemplary Embodiment =

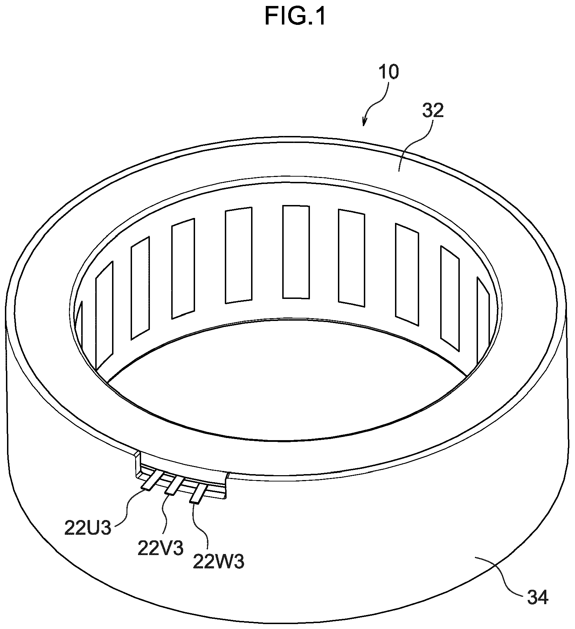

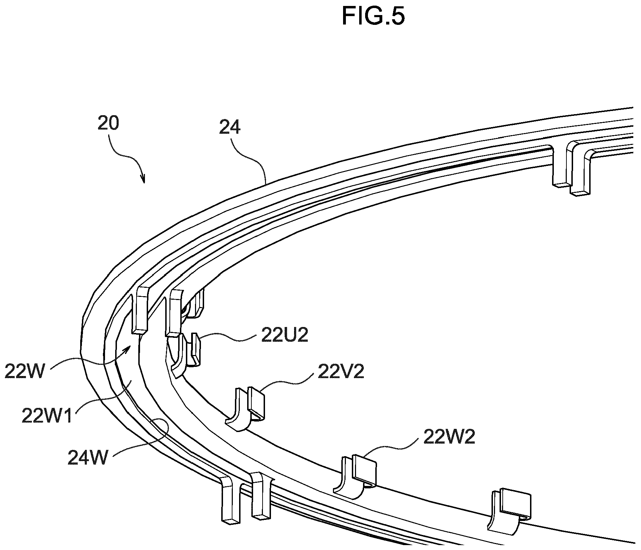

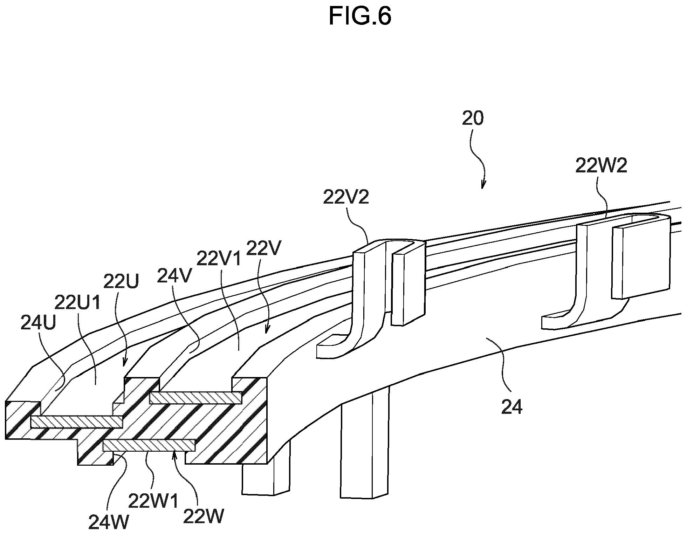

Below, a stator 10 according to a first exemplary embodiment of the present disclosure is described with reference to Fig. 1 to Fig. 8. Scaling of the drawings in the figures is modified where appropriate. In the drawings, some reference symbols may be omitted with a view to simplification of the drawings.

As shown in Fig. 1 to Fig. 3, the stator 10 according to the present exemplary embodiment is an armature (a stator) provided with a stator core 12, a plural number (24 in this exemplary embodiment) of coils 18, insulators 19, a first busbar unit 20, a second busbar unit 26 and a sealing resin 32. The stator core 12, the plural coils 18, the insulators 19, the first busbar unit 20, the second busbar unit 26 and the sealing resin 32 are accommodated inside a circular tube-shaped case 34. A rotor, which is not shown in the drawings, is disposed inside the stator 10, structuring an inner rotor-type motor (a rotating armature). This motor is, as an example, a three-phase motor and is a resin-molded motor in which the stator core 12, the plural coils 18, the insulators 19, the first busbar unit 20 and the second busbar unit 26 are sealed by the sealing resin 32.

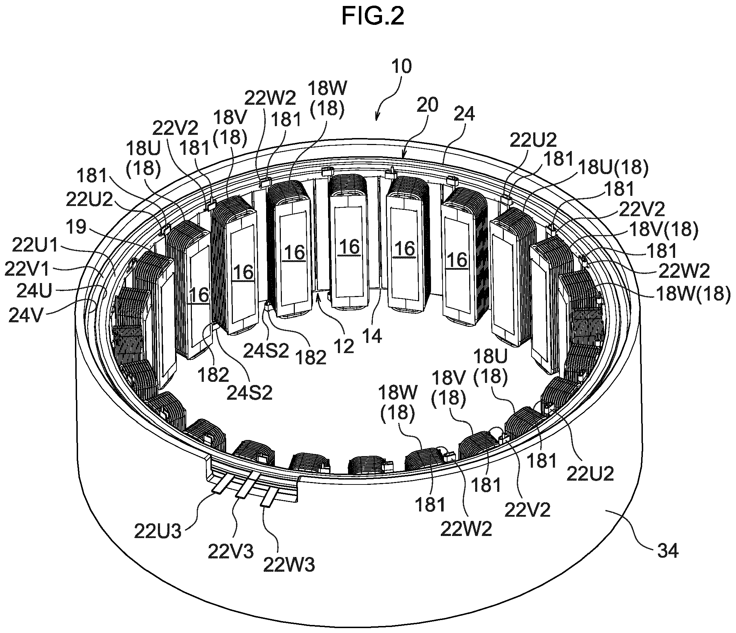

The stator core 12 is formed by lamination of plural core pieces formed of electromagnetic steel plate. The stator core 12 is formed in an annular shape, including a yoke 14 and a plural number (24 in the present exemplary embodiment) of teeth 16. The stator core 12 may be divided into plural parts in the circumferential direction. The yoke 14 in formed in a circular tube shape. The plural teeth 16 are formed so as to protrude from an inner periphery face of the yoke 14 toward the inner side in the radial direction of the stator core 12. The plural teeth 16 are formed to be arrayed at equal intervals in the circumferential direction of the stator core 12. Respective slots (which are not assigned reference symbols) are formed between the plural teeth 16. The stator 10 tightly fits inside the case 34. The numbers of poles and slots of the stator 10 illustrated in Fig. 2 are merely an example and are not limiting.

The plural coils 18 are respectively wound in helical shapes around the plural teeth 16. The insulators 19 are interposed between each coil 18 and tooth 16. In place of the insulators 19, an insulating material such as insulating paper, varnish or the like may be interposed between the coils 18 and teeth 16. Each coil 18 is formed by a wire constituted of, for example, copper, aluminium, silver or an alloy of the same being covered with an insulating material such as enamel or the like. The wire is formed as a round wire in this exemplary embodiment, but may be a flat wire, a hexagonal wire or the like. Viewed in the radial direction of the stator core 12, the coil 18 is wound substantially in a long, narrow, rectangular shape whose longer direction is in the axial direction of the stator core 12. One end portion 181 and an other end portion 182 of the coil 18 are, for example, both disposed at a base side of the tooth 16. The one end portion 181 is a winding start end portion and the other end portion 182 is a winding finish end portion. The one end portion 181 extends to one side in the axial direction of the stator core 12, and the other end portion 182 extends to the other side in the axial direction of the stator core 12.

The plural coils 18 are constituted by a plural number (eight in this exemplary embodiment) of U-phase coils 18U, a plural number (eight in this exemplary embodiment) of V-phase coils 18V and a plural number (eight in this exemplary embodiment) of W-phase coils 18W. The U-phase coils 18U, V-phase coils 18V and W-phase coils 18W are successively arrayed in this order along the circumferential direction of the stator core 12. The U-phase coils 18U, V-phase coils 18V and W-phase coils 18W are spaced apart from one another in the circumferential direction of the stator core 12 and equipped to the teeth 16 of the stator core 12. Neighboring coils 18 of the same phase (the same phase of the U phase, V phase or W phase) are electronically connected to one another by the first busbar unit 20.

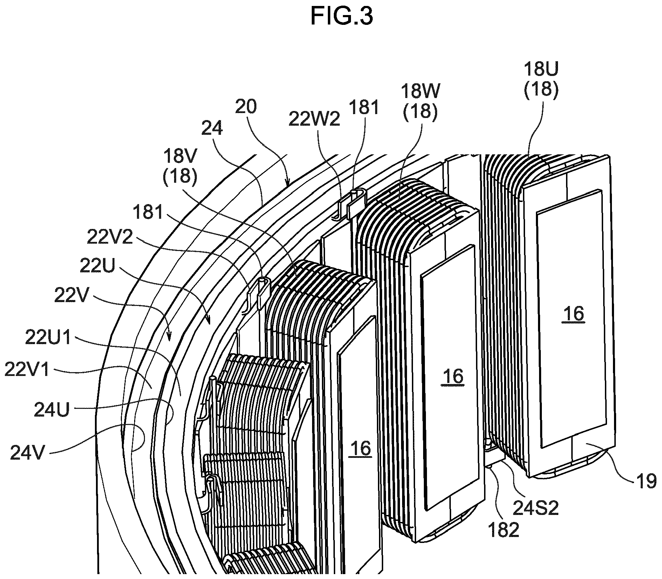

As shown in Fig. 3 to Fig. 6, the first busbar unit 20 is disposed adjacent to the stator core 12 at one side in the axial direction thereof. The first busbar unit 20 is formed of a U-phase busbar 22U, a V-phase busbar 22V, a W-phase busbar 22W, and a first insulating resin 24. The U-phase busbar 22U, V-phase busbar 22V and W-phase busbar 22W are equivalent to the "busbar" recited in the present disclosure, and the first insulating resin 24 is equivalent to the "insulating resin" recited in the present disclosure.

The U-phase busbar 22U, V-phase busbar 22V and W-phase busbar 22W are fabricated by, for example, press-molding of metal plates. The U-phase busbar 22U, V-phase busbar 22V and W-phase busbar 22W include, respectively, first extending portions 22U1, 22V1 and 22W1 and plural numbers of first joining portions 22U2, 22V2 and 22W2. The first extending portions 22U1, 22V1 and 22W1 extend along the yoke 14 in annular shapes in the circumferential direction of the stator core 12. The first joining portions 22U2, 22V2 and 22W2 project toward the base sides of the corresponding teeth 16 from the first extending portions 22U1, 22V1 and 22W1. The first extending portions 22U1, 22V1 and 22W1 are equivalent to an "extending portion" recited in the present disclosure. The first joining portions 22U2, 22V2 and 22W2 are equivalent to "joining portions" recited in the present disclosure. The U-phase busbar 22U, V-phase busbar 22V and W-phase busbar 22W further include a U-phase terminal portion 22U3, a V-phase terminal portion 22V3 and a W-phase terminal portion 22W3 (see Fig. 1 and Fig. 2) that project from the first extending portions 22U1, 22V1 and 22W1 to the radial direction outer side of the stator core 12. The U-phase terminal portion 22U3, V-phase terminal portion 22V3 and W-phase terminal portion 22W3 may be structured to project to an axial direction outer side of the stator core 12 from the first extending portions 22U1, 22V1 and 22W1.

The first extending portion 22U1 of the U-phase busbar 22U, the first extending portion 22V1 of the V-phase busbar 22V and the first extending portion 22W1 of the W-phase busbar 22W are disposed to be concentric with the stator core 12. The first extending portions 22U1, 22V1 and 22W1 are formed in plate shapes with plate thickness directions along the axial direction of the stator core 12. In the present exemplary embodiment, as an example, the first extending portion 22U1 is disposed at the stator core 12 radial direction inner side relative to the first extending portion 22V1, and the first extending portion 22W1 is disposed at the stator core 12 axial direction other side (the side at which the stator core 12 is disposed) relative to the first extending portion 22U1 and first extending portion 22V1. The first extending portion 22U1 is disposed to be offset to one side in the stator core 12 axial direction relative to the first extending portion 22V1. The first extending portions 22U1, 22V1 and 22W1 are disposed in regions that are superposed with the yoke 14 as seen in the axial direction of the stator core 12. The above-described positional relationships of the first extending portions 22U1, 22V1 and 22W1 are merely an example. For example, the first extending portions 22U1, 22V1 and 22W1 may be only at portions in the circumferential direction rather than the whole circumference, and the U-phase busbar 22U, V-phase busbar 22V and W-phase busbar 22W need not be superposed in the axial direction. In the present exemplary embodiment, the U-phase busbar 22U, V-phase busbar 22V and W-phase busbar 22W are integrated with the first insulating resin 24, but the respective phases may be separately integrated with insulating resins. In the present exemplary embodiment, the first extending portions 22U1, 22V1 and 22W1 are layered in the plate thickness direction, but the first extending portions 22U1, 22V1 and 22W1 may have upright structures (with plate thickness directions in the radial direction).

The first joining portions 22U2, 22V2 and 22W2 extend from the first extending portions 22U1, 22V1 and 22W1 to the stator core 12 axial direction one side at the stator core 12 radial direction inner side. Respective distal end portions of the first joining portions 22U2, 22V2 and 22W2 are disposed near the bases of the corresponding teeth 16. Respective first insertion portions (which are not assigned reference symbols) are formed in the distal end portions of the first joining portions 22U2, 22V2 and 22W2. Seen in the axial direction of the stator core 12, the first insertion portions are formed in "U" shapes that open to one side in the circumferential direction of the stator core 12. The one end portions 181 of the coils 18 are inserted to the insides of the first insertion portions, and the first insertion portions are joined to the one end portions 181 of the coils 18 by means such as welding or the like. Structures are also possible in which the first insertion portions are not formed in the distal end portions of the first joining portions 22U2, 22V2 and 22W2.

The first insulating resin 24 is constituted of a resin that is insulative, is formed in an annular shape, and is tightly fitted inside the case 34. Structures are possible in which the case 34 is not provided. The first extending portions 22U1, 22V1 and 22W1 of the U-phase busbar 22U, V-phase busbar 22V and W-phase busbar 22W are embedded in the first insulating resin 24 described above. The first extending portions 22U1, 22V1 and 22W1 are embedded in the first insulating resin 24 by, for example, insert-molding. Thus, the first insulating resin 24 is molded integrally with the first extending portions 22U1, 22V1 and 22W1.

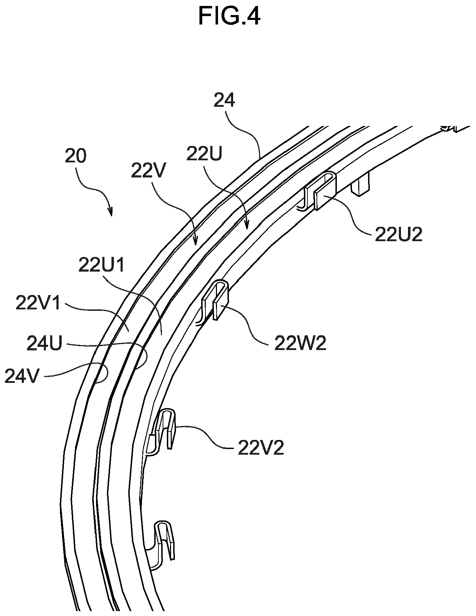

As shown in Fig. 4 to Fig. 6, three aperture portions 24U, 24V and 24W are formed in the first insulating resin 24. The aperture portions 24U, 24V and 24W partially expose the first extending portions 22U1, 22V1 and 22W1 to the outside of the first insulating resin 24. The three aperture portions 24U, 24V and 24W are formed in, as an example, annular shapes that are concentric with the first insulating resin 24. Two of the three aperture portions 24U, 24V and 24W-the aperture portions 24U and 24V-are formed in a surface at the one axial direction side of the first insulating resin 24 (a surface at the opposite side thereof from the side at which the stator core 12 is disposed). One of the three aperture portions 24U, 24V and 24W-the aperture portion 24W-is formed in a surface at the other axial direction side of the first insulating resin 24 (a surface at the side thereof at which the stator core 12 is disposed).

The two aperture portions 24U and 24V are arrayed in a concentric pattern in the radial direction of the stator core 12. The aperture portion 24U is disposed at the stator core 12 axial direction one side (the opposite side from the side at which the stator core 12 is disposed) relative to the first extending portion 22U1. Thus, a surface at one thickness direction side of the first extending portion 22U1 is exposed to the stator core 12 axial direction one side. The aperture portion 24V is disposed at the stator core 12 axial direction one side relative to the first extending portion 22V1. Thus, a surface at one thickness direction side of the first extending portion 22V1 is exposed to the stator core 12 axial direction one side. The one aperture portion 24W is disposed at the stator core 12 axial direction other side (the side at which the stator core 12 is disposed) relative to the first extending portion 22W1. Thus, a surface at one thickness direction side of the first extending portion 22W1 is exposed to the stator core 12 axial direction other side.

Positions of the three aperture portions 24U, 24V and 24W may be modified as appropriate in accordance with positions of the first extending portions 22U1, 22V1 and 22W1. In the present exemplary embodiment, the three aperture portions 24U, 24V and 24W are formed in annular shapes, but structures are possible in which the aperture portions 24U, 24V and 24W are respectively divided into plural divisions in the circumferential direction of the stator core 12.

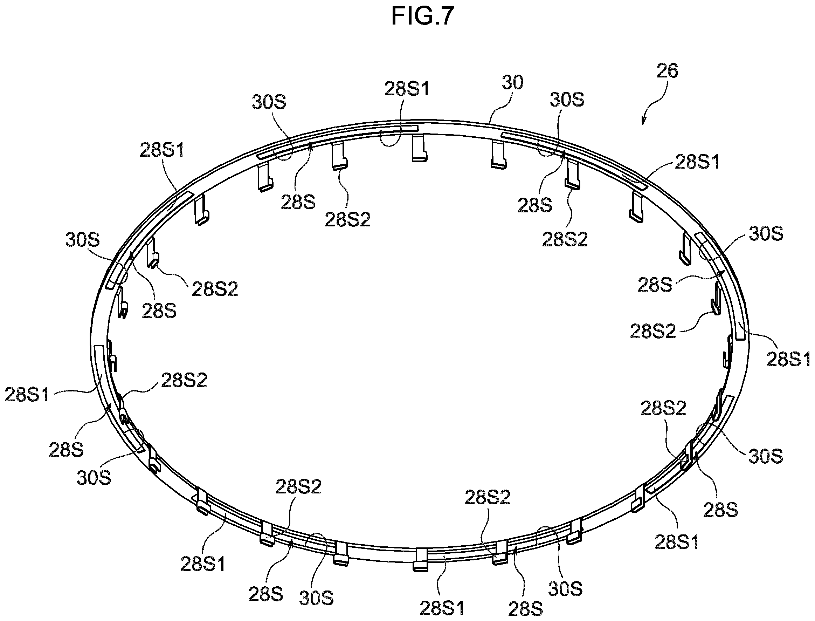

The second busbar unit 26 is disposed adjacent to the other side of the stator core 12. As shown in Fig. 7, the second busbar unit 26 is formed of a second busbar 28 and a second insulating resin 30. The second busbar 28 is equivalent to the "busbar" recited in the present disclosure and the second insulating resin 30 is equivalent to the "insulating resin" recited in the present disclosure. In the present exemplary embodiment, the first busbar unit 20 and the second busbar unit 26 are disposed to be divided to the two axial direction sides of the stator core 12, but the first busbar unit 20 and second busbar unit 26 may be disposed together at one side of the stator core 12. The busbars need not necessarily all be integrated. There may be one busbar unit or plural busbar units.

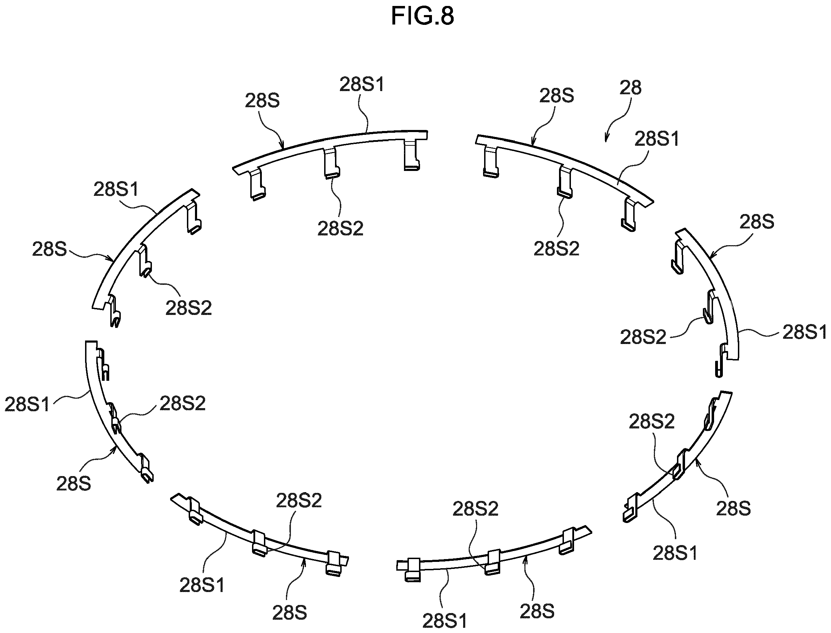

As shown in Fig. 8, as an example, the second busbar 28 is structured by a plural number (eight in this exemplary embodiment) of busbar segments 28S. The plural busbar segments 28S are disposed to be arrayed at equal intervals in the circumferential direction of the stator core 12. The plural busbar segments 28S each include a second extending portion 28S1 and a plural number (three in this exemplary embodiment) of second joining portions 28S2. The second extending portion 28S1 extends along the yoke 14 in a circular arc shape in the circumferential direction of the stator core 12. The second joining portions 28S2 protrude from the second extending portion 28S1 towards distal end sides of the teeth 16. The second extending portions 28S1 are equivalent to the "extending portion" recited in the present disclosure, and the second joining portions 28S2 are equivalent to the "joining portions" recited in the present disclosure.

Each second extending portion 28S1 is formed in a plate shape that is curved in a circular arc shape that is concentric with the stator core 12 and has a plate thickness direction in the axial direction of the stator core 12. The plural second joining portions 28S2 extend from the second extending portion 28S1 to the stator core 12 axial direction other side at the stator core 12 radial direction inner side. Distal end portions of the second joining portions 28S2 are disposed near the bases of the corresponding teeth 16. Second insertion portions (which are not assigned reference symbols) are formed in the distal end portions of the second joining portions 28S2. Seen in the axial direction of the stator core 12, the second insertion portions are formed in "U" shapes that open to the one side in the circumferential direction of the stator core 12. The other end portions 182 of the coils 18 are inserted to the insides of the second insertion portions, and the second insertion portions are joined to the other end portions 182 of the coils 18 by means such as welding or the like. Structures are also possible in which the second insertion portions are not formed in the distal end portions of the second joining portions 28S2. Furthermore, structures are possible in which the second busbar 28 is formed integrally rather than being divided into the busbar segments 28S. In the present exemplary embodiment the second busbar 28 is plurally divided in accordance with motor specifications but, depending on motor specifications, the second busbar 28 may be formed integrally rather than being divided.

The second insulating resin 30 is constituted of a resin that is insulative, is formed in an annular shape, and is tightly fitted inside the case 34. The second extending portions 28S1 of the busbar segments 28S are embedded in this second insulating resin 30. The second extending portions 28S1 are embedded in the second insulating resin 30 by, for example, insert-molding. Thus, the second insulating resin 30 is molded integrally with the plural second extending portions 28S1.

As shown in Fig. 7, a plural number (eight in this exemplary embodiment) of aperture portions 30S are formed in the second insulating resin 30. The aperture portions 30S partially expose the second extending portions 28S1 to the outside of the second insulating resin 30. The plural aperture portions 30S are formed in a surface at the other axial direction side of the second insulating resin 30 (a surface at the opposite side thereof from the side at which the stator core 12 is disposed). The plural aperture portions 30S are formed in circular arc shapes that are concentric with the second insulating resin 30 and are disposed to be arrayed at equal intervals in the circumferential direction of the stator core 12. The plural aperture portions 30S are disposed at the other axial direction side of the stator core 12 relative to the plural second extending portions 28S1 of the second busbar 28 (the opposite side from the side at which the stator core 12 is disposed). The aperture portions 30S expose the second extending portions 28S1 to the stator core 12 axial direction other side.

As shown in Fig. 1, the sealing resin 32 is a molded resin that seals in the stator core 12, the plural coils 18, the insulators 19, the first busbar unit 20 and the second busbar unit 26. The sealing resin 32 is, for example, a resin in which a powder of a non-magnetic material is kneaded as a filler into a thermosetting resin, a thermoplastic resin or the like, such as an epoxy resin or the like. The sealing resin 32 is thermally conductive and electrically insulative. The sealing resin 32 is constituted with a higher thermal conductivity than the first insulating resin 24 and the second insulating resin 30. The sealing resin 32 is formed by, for example, injection molding, transfer-molding or the like, and has a circular tube-shaped exterior. The two axial direction ends of the sealing resin 32 are disposed to be coplanar surfaces with two axial direction end faces of the case 34.

The stator core 12, the plural coils 18, the insulators 19, the first busbar unit 20 and the second busbar unit 26 are embedded in the sealing resin 32. Portions of the sealing resin 32 fill in the three aperture portions 24U, 24V and 24W formed in the first insulating resin 24 of the first busbar unit 20. Portions of the sealing resin 32 are in area contact with the first extending portions 22U1, 22V1 and 22W1 of the U-phase busbar 22U, V-phase busbar 22V and W-phase busbar 22W. Similarly, portions of the sealing resin 32 fill in the plural aperture portions 30S formed in the second insulating resin 30 of the second busbar unit 26. Portions of the sealing resin 32 are in area contact with the second extending portions 28S1 of the plural busbar segments 28S.

In the stator 10 with the structure described above, the U-phase terminal portion 22U3, V-phase terminal portion 22V3 and W-phase terminal portion 22W3 of the U-phase busbar 22U, V-phase busbar 22V and W-phase busbar 22W are connected to a three-phase power supply. Consequently the stator 10 with the structure described above functions as a three-phase motor. Although not shown in the drawings, this three-phase motor is equipped with cooling medium channels for, for example, oil cooling by a fluid such as automatic transmission fluid or the like, forced air cooling by blown air, forced water cooling using a water jacket, or the like. These channels are provided in vicinities of the portions of the extending portions 22U1, 22V1, 22W1 and 28S1 that are exposed through the insulating resins 24 and 30.

### - Operation and Effects -

Now, operation and effects of the present exemplary embodiment are described.

In the stator 10 with the structure described above, the coils 18 are wound round, respectively, the plural teeth 16 of the stator core 12. The one end portions 181 of the coils 18 are connected to the first joining portions 22U2, 22V2 and 22W2 of the U-phase busbar 22U, V-phase busbar 22V and W-phase busbar 22W that are adjacently disposed at the axial direction one side relative to the stator core 12. The U-phase busbar 22U, V-phase busbar 22V and W-phase busbar 22W include the first extending portions 22U1, 22V1 and 22W1 that extend in the circumferential direction of the stator core 12. The first extending portions 22U1, 22V1 and 22W1 are partially exposed through the first insulating resin 24 that is formed integrally with the U-phase busbar 22U, V-phase busbar 22V and W-phase busbar 22W.

The other end portions 182 of the coils 18 are connected to the second joining portions 28S2 of the plural busbar segments 28S that are adjacently disposed at the axial direction other side relative to the stator core 12. The busbar segments 28S include the second extending portions 28S1 that extend along the yoke 14 of the stator core 12 in the circumferential direction of the stator core 12. The second extending portions 28S1 are partially exposed through the second insulating resin 30 that is formed integrally with the plural busbar segments 28S.

The portions of the first extending portions 22U1, 22V1 and 22W1 that are exposed through the first insulating resin 24 are sealed by the sealing resin 32 formed of the resin with higher thermal conductivity than the first insulating resin 24. Similarly, the portions of the second extending portions 28S1 that are exposed through the second insulating resin 30 are sealed by the sealing resin 32 described above. Because heat may be dissipated through the sealing resin 32 from the busbars 22U, 22V, 22W and 28S, heat dissipation of the busbars 22U, 22V, 22W and 28S may be improved even when the thermal conductivities of the first insulating resin 24 and second insulating resin 30 are low. As a result, performance of the motor may be improved while assuring moldability of the first insulating resin 24 and second insulating resin 30 and suppressing an increase in fabrication costs.

In the stator 10 with the structure described above, portions of the first extending portions 22U1, 22V1 and 22W1 of the U-phase busbar 22U, V-phase busbar 22V and W-phase busbar 22W are exposed through the first insulating resin 24 in the axial direction of the stator core 12. Similarly, portions of the second extending portions 28S1 of the plural busbar segments 28S are exposed through the second insulating resin 30 in the axial direction of the stator core 12. These exposed portions of the first extending portions 22U1, 22V1 and 22W1 and the second extending portions 28S1 are sealed by the sealing resin 32. Therefore, heat dissipation of the busbars 22U, 22V, 22W and 28S may be improved even while, for example, an increase in space required in the radial direction of the stator core 12 is suppressed.

In the stator 10 with the structure described above, the exposed portions of the extending portions 22U1, 22V1, 22W1 and 28S1 that are exposed through the insulating resins 24 and 30 form surfaces at the plate thickness direction one sides of the respective extending portions 22U1, 22V1, 22W1 and 28S1. Therefore, surface areas of the exposed portions may be large.

In the stator 10 with the structure described above, the stator core 12, the plural coils 18, the insulators 19, the first busbar unit 20 and the second busbar unit 26 are sealed in by the sealing resin 32 that seals the portions of the first extending portions 22U1, 22V1 and 22W1 exposed through the first insulating resin 24 and the portions of the second extending portions 28S1 exposed through the second insulating resin 30. Thus, the portions of the first extending portions 22U1, 22V1 and 22W1 and the second extending portions 28S1 that are exposed through the first insulating resin 24 and the second insulating resin 30 are sealed by the sealing resin 32 of the resin-molded motor. Therefore, a dedicated sealing resin for improving heat dissipation of the busbars 22U, 22V, 22W and 28S is not required.

In the stator 10 with the structure described above, the cooling medium channels are provided in vicinities of the portions of the extending portions 22U1, 22V1, 22W1 and second joining portions 28S2 that are exposed through the insulating resins 24 and 30. Therefore, heat dissipation by cooling via the sealing resin with high thermal conductivity may be improved compared to a structure in which a cooling medium is provided in the insulating resins 24 and 30 with lower thermal conductivities.

### = Second Exemplary Embodiment =

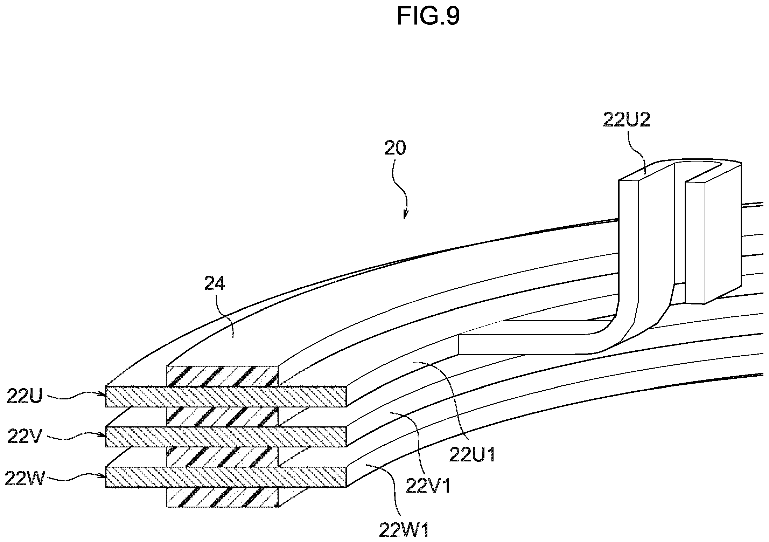

Now, a second exemplary embodiment of the present disclosure is described with reference to Fig. 9. Structures and operations that are basically the same as in the first exemplary embodiment are assigned the same reference symbols as in the first exemplary embodiment and are not described here.

The second embodiment is similar to the first embodiment except that structure of the first busbar unit 20 as shown in Fig. 9 is different from the structure of the first busbar unit 20 according to the first embodiment. In this first busbar unit 20, the first extending portions 22U1, 22V1 and 22W1 of the U-phase busbar 22U, V-phase busbar 22V and W-phase busbar 22W are arrayed spaced apart in the axial direction of the stator core 12. Middle portions of the first extending portions 22U1, 22V1 and 22W1 in the radial direction of the stator core 12 are embedded in the first insulating resin 24. Plural penetrating holes, which are not shown in the drawings, are formed in the middle portions of the first extending portions 22U1, 22V1 and 22W1, in rows in the circumferential direction of the stator core 12. Portions of the first insulating resin 24 fill in these penetrating holes. These penetrating holes are required to fix and integrate the U-phase busbar 22U, V-phase busbar 22V and W-phase busbar 22W, so are not necessarily required if integration by an alternative structure is possible. For example, the penetrating holes are not required in a structure in which, for example, only one radial direction side of the first extending portions 22U1, 22V1 and 22W1 is exposed and the insulating resin connects up at the other side.

In the second embodiment, portions (portions at both sides of the radial direction) of the first extending portions 22U1, 22V1 and 22W1 of the U-phase busbar 22U, V-phase busbar 22V and W-phase busbar 22W are exposed through the first insulating resin 24 in the axial direction and radial direction of the stator core 12, and these exposed portions are sealed in by the sealing resin 32 (which is not shown in Fig. 9). Therefore, for example, freedom of design of shapes of the exposed portions of the busbars 22U, 22V and 22W is improved and they may be formed in arbitrary shapes. In addition, heat dissipation of the busbars 22U, 22V and 22W may be raised. In the second embodiment too, heat dissipation of the busbars 22U, 22V and 22W may be improved even when the thermal conductivity of the first insulating resin 24 is low.

In the second embodiment as described above, a structure is possible in which, of the portions of the first extending portions 22U1, 22V1 and 22W1 at both radial direction sides that protrude from the first insulating resin 24, only the portions at one radial direction side protrude, with the first extending portions 22U1, 22V1 and 22W1 alternatingly protruding inward and outward in the radial direction.

The embodiments described above have structures in which the U-phase busbar 22U, V-phase busbar 22V and W-phase busbar 22W are formed in annular shapes, but this is not limiting. For example, structures are possible in which the U-phase busbar 22U, V-phase busbar 22V and W-phase busbar 22W are formed in "C" shapes.

Numerous modes may be embodied within a scope that does not depart from the gist of the present disclosure. It will also be clear that the scope of the present disclosure is not to be limited to the exemplary embodiments described above.

The disclosures of Japanese Patent Application No. 2021-213133 filed December 27, 2021 are incorporated into the present specification by reference in their entirety. All references, patent applications and technical specifications cited in the present specification are incorporated by reference into the present specification to the same extent as if the individual references, patent applications and technical specifications were specifically and individually recited as being incorporated by reference.

## Claims

1. A stator, comprising:
a stator core including a yoke and a plurality of teeth;
a plurality of coils that are wound one-to-one onto the plurality of teeth;
a busbar disposed adjacent to the stator core, the busbar including joining portions to which end portions of the coils are joined and an extending portion that extends in a circumferential direction of the stator core;
an insulating resin that is molded integrally with the busbar in a state in which the extending portion is partially exposed; and
a sealing resin formed of a resin with higher thermal conductivity than the insulating resin, the sealing resin sealing in at least an exposed portion of the extending portion that is exposed through the insulating resin.

2. The stator according to claim 1, wherein a portion of the extending portion is exposed through the insulating resin in an axial direction of the stator core.

3. The stator according to claim 2, wherein the exposed portion of the extending portion that is exposed through the insulating resin is a surface at one plate thickness direction side of the extending portion.

4. The stator according to any one of claims 1 to 3, wherein a portion of the extending portion is exposed through the insulating resin in a radial direction of the stator core.

5. The stator according to any one of claims 1 to 4, wherein the stator core, the plurality of coils and the insulating resin are sealed in by the sealing resin.

6. The stator according to any one of claims 1 to 5, wherein a cooling medium channel is provided in a vicinity of the exposed portion of the extending portion that is exposed through the insulating resin.
